# DEMANDE DE BREVET EUROPEEN

(11) **EP 1 398 186 A1**
(43) Date de publication de la demande: **17.03.2004**
(21) Numéro de dépôt: 03292212.2
(22) Date de dépôt: 09.09.2003
(51) Int. Cl.: B60H 1/00, B60R 21/09

(54) **Dispositif de commande intégré à une planche de bord de véhicule**

(30) Priorité: 13.09.2002 FR 0211352
(71) Demandeur: Renault s.a.s., 92100 Boulogne Billancourt (FR)
(72) Inventeur: Bouisset, Damien, 92150 Suresnes (FR); Regent, Aude, 78610 Le Perray en Yvelines (FR)

(57) **Abrégé**

Un dispositif de commande d'un système de ventilation pour un habitacle de véhicule comporte un boîtier (3) destiné à être fixé sur une planche de bord (1), un socle (4) monté pivotant sur le boîtier (3) autour d'un axe (XX) sensiblement perpendiculaire à une face avant du boîtier (3) pour commander une première commande, un levier (7) monté pivotant sur le socle (4) selon un axe sensiblement parallèle à la face avant pour commander une deuxième commande. Selon l'invention, le dispositif comporte en outre une mollette (6) concentrique au socle (4) et montée pivotante autour de l'axe (XX) du socle (4) pour commander une troisième commande.

## Description

L'invention concerne une planche de bord de véhicule intégrant un dispositif de commande, en particulier pour la commande d'une installation de chauffage ventilation, ainsi qu'un tel dispositif.

On connaît par le document WO 00/09353 un tableau de commande pour une installation de véhicule automobile permettant de transmettre quatre commandes, à savoir une consigne de température, une répartition d'arrivée d'air, une vitesse de ventilateur, et une commande de recyclage ou de renouvellement d'air. Les deux premières commandes sont transmises par l'intermédiaire de deux boutons rotatifs coaxiaux, dans le but de réduire l'encombrement du tableau de commande de manière à pouvoir l'intégrer plus facilement dans une planche de bord. Les deux autres commandes sont transmises par deux leviers apparaissant en façade sous la forme de deux curseurs.

Toujours dans le but de réduire l'encombrement transversal, le document FR 2 693 408 propose un dispositif de commande pour une installation de chauffage et de ventilation d'un habitacle de véhicule dans lequel deux groupes de deux sélecteurs concentriques sont disposés côte à côte. Chaque groupe comporte un premier sélecteur rotatif ayant une forme de disque, monté au centre d'un deuxième sélecteur rotatif ayant une forme de couronne. Ainsi, les quatre commandes sont concentrées dans deux groupes de sélecteurs.

Egalement, le document FR 2 757 284 propose un dispositif de commande comportant un levier monté pivotant autour d'un premier axe sensiblement perpendiculaire à la planche de bord pour agir sur des moyens de sélection de la température, et pivotant autour d'un deuxième axe sensiblement parallèle à la planche de bord pour agir sur des moyens de sélection d'un débit d'air. Les commandes de répartition de l'entrée d'air, de recyclage et de désembuage sont couplées avec les deux commandes précédentes. L'ensemble des commandes est donc regroupé vers un seul levier.

Même si les dispositifs des documents WO 00/09353 et FR 2 693 408 ont un encombrement réduit, celui-ci reste encore plus important qu'avec le dispositif à levier unique. Cependant, dans ce dernier cas, l'utilisateur ne dispose plus de toutes les possibilités de réglage.

Par ailleurs, les normes de sécurité à l'intérieur de l'habitacle imposent que les éléments saillants sur la planche de bord puissent se rétracter en cas de choc avec un occupant.

C'est donc un objectif de l'invention de proposer un dispositif de commande d'une installation de chauffage et ventilation ayant un faible encombrement tout en conservant le plus d'indépendance des commandes entre elles.

Avec ces objectifs en vue, l'invention a pour objet un dispositif de commande d'un système de ventilation pour un habitacle de véhicule, comportant un boîtier destiné à être fixé sur une façade, un socle monté pivotant sur le boîtier autour d'un axe sensiblement perpendiculaire à une face avant du boîtier pour commander une première commande, un levier monté pivotant sur le socle selon un axe sensiblement parallèle à la face avant pour commander une deuxième commande, caractérisé en ce que le dispositif comporte en outre une mollette concentrique au socle et montée pivotante autour de l'axe du socle pour commander une troisième commande.

Le dispositif selon l'invention regroupe ainsi trois commandes en occupant en surface sur la planche de bord uniquement celle dans l'encombrement de la molette.

De préférence, le pivotement du socle commande une température dans l'habitacle, le pivotement du levier sur le socle commande une vitesse de ventilateur et le pivotement de la molette commande une répartition de l'aération. Ainsi, les mouvements de pivotement du socle et de la molette peuvent être transmis mécaniquement, par exemple par câble, et la rotation du levier peut agir sur des contacts électriques eL transmettre une commande électrique vers un moteur de ventilateur.

Avantageusement, le dispositif de commande comporte une couronne interposée entre le socle et la molette et fixée rigidement sur le boîtier. La couronne peut porter des indications sur les réglages de la molette, ce qui évite de placer ces indications à l'extérieur de la molette et limite l'encombrement du dispositif.

De manière particulière, le dispositif de commande comporte une ampoule d'éclairage sous la couronne. Comme les indications sont regroupées sur la couronne, une seule ampoule suffit à les éclairer.

C'est un autre objectif de l'invention de proposer une configuration permettant de respecter les normes de sécurité.

Avec cet objectif en vue, l'invention a aussi pour objet une planche de bord comportant un dispositif de commande décrit précédemment, une façade comportant une ouverture sensiblement circulaire, le dispositif de commande étant fixé par des moyens fusibles à la façade de telle sorte que la molette, le socle et le levier traversent l'ouverture pour être accessible à un utilisateur, les moyens fusibles permettant l'escamotage du dispositif de commande derrière la façade lors d'un choc sur le dispositif de commande.

Ainsi, lorsqu'un occupant du véhicule vient frapper par accident contre le dispositif de commande, un effort est transmis au boîtier et aux moyens fusibles. Ces derniers, après l'atteinte d'un effort prédéterminé, laissent le boîtier se déplacer de telle sorte que la molette, le socle et le levier s'enfoncent dans la planche de bord à travers l'ouverture. Les moyens fusibles sont par exemple des pattes de fixation qui rompent, se déforment ou se détachent sous l'effort.

De manière particulière, le dispositif de commande comporte une couronne interposée entre le socle et la molette et fixée rigidement sur le boîtier, un doigt fixé sur la molette faisant saillie et se prolongeant au-dessus de la couronne pour qu'un utilisateur puisse saisir le doigt et faire pivoter la molette. Ainsi, la molette peut être manipulée et aucun élément ne fait saillie au-delà du diamètre extérieur de la molette, ce qui évite de former un obstacle qui interférerait avec la façade lors de l'escamotage du dispositif de commande.

De préférence, la couronne porte des pictogrammes associés à différentes fonctions, le doigt comportant un encochage au-dessus de la couronne laissant le pictogramme visible quand le doigt est placé au-dessus d'un pictogramme. Ainsi, l'occupant peut parfaitement identifier la fonction sélectionnée, de manière claire et immédiate.

De préférence, le levier est mobile entre une première position et une deuxième position, la planche de façade comportant une échancrure le long de l'ouverture, l'échancrure correspondant sensiblement à la projection du levier sur la façade lorsqu'il passe d'une position à l'autre, pour que le levier puisse s'escamoter derrière la façade lors d'un choc sur le dispositif de commande. Ainsi, le levier ne peut pas venir en butée contre la façade et il s'escamote complètement lors d'un choc d'un occupant contre le levier. L'espace de l'échancrure peut avantageusement être utilisé pour indiquer les fonctions du levier.

L'invention sera mieux comprise et d'autres particularités et avantages apparaîtront à la lecture de la description qui va suivre, la description faisant référence aux dessins annexés parmi lesquels :
- la figure 1 est une vue de dessus d'un dispositif de commande conforme à l'invention ;
- la figure 2 est une coupe selon la ligne II-II de la figure 1 du dispositif monté sur une planche de bord ;
- la figure 3 est une vue similaire à la figure 2, seule la planche de bord étant représentée en coupe.

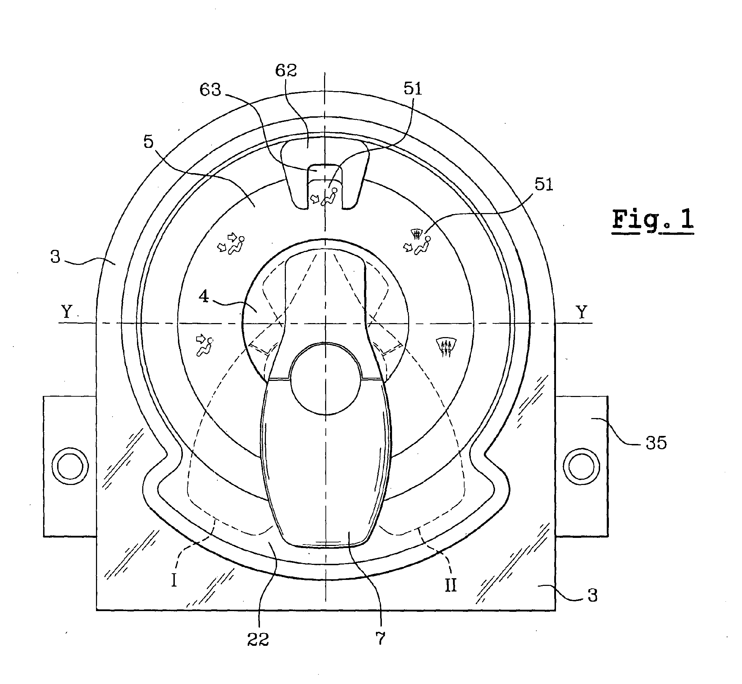

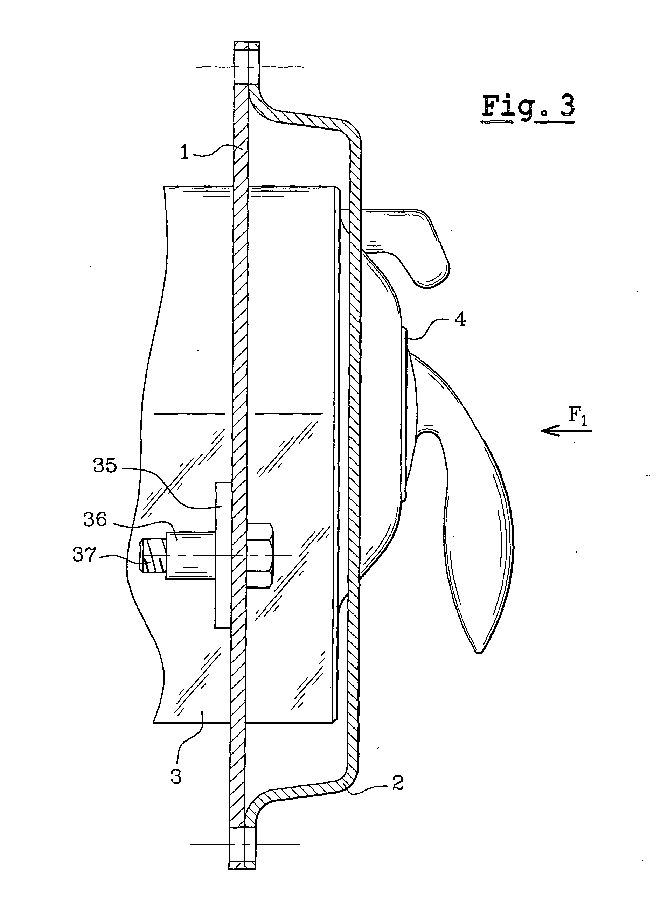

En se référant aux figures 1 à 3, une planche de bord (1), visible partiellement, comporte une façade. Dans le mode de réalisation représenté, la façade est formée en deux parties, une partie structurelle correspondant à la partie représentée de la planche de bord 1, et une planche de façade 2 rapportée. Mais l'invention s'applique également à une façade réalisée d'une seule pièce.

Un dispositif de commande selon l'invention est monté sur la planche de bord 1 et derrière la planche de façade 2 dans laquelle une ouverture 21 circulaire est pratiquée. Le dispositif de commande comporte un boîtier 3 fixé sur la planche de bord 1. Un socle 4 est monté pivotant autour d'un axe XX sensiblement perpendiculaire à la planche de façade 2 et centré sur l'ouverture 21. Une couronne 5 faisant partie du boîtier 3 entoure le socle 4. Une molette 6 est montée pivotante autour de la couronne et pivote donc autour de l'axe XX. De plus, un levier 7 est monté pivotant sur le socle 4 autour d'un axe de socle YY sensiblement parallèle à la planche de façade 2.

Le boîtier 3 comporte deux pattes 35 de fixation et est fixé par exemple par des vis 37 traversant la planche de bord 1 et vissées dans un fourreau 36 faisant saillie de chaque patte 35. Les pattes 35 sont calibrés pour qu'elles cassent lorsqu'une force supérieure à un seuil déterminé s'exerce sur le boîtier 3 dans le sens de la flèche F1. Les pattes 35 forment ainsi des moyens fusibles.

La molette 6 est montée pivotante par exemple sur un épaulement 31 du boîtier. Un couvercle 32 du boîtier 3 forme une surface de retenue pour empêcher le retrait de la molette 6. La molette 6 entraîne un mécanisme de transmission, non représenté, mais connu dans l'état de la technique, par un secteur denté 65 pour transmettre son mouvement, par exemple à des volets répartissant l'air vers des bouches d'aération dans l'habitacle du véhicule. De préférence, la molette 6 comporte des moyens d'indexage, non représentés, pour indexer la position de la molette 6 en rotation autour de l'axe XX. La molette 6 comporte également un doigt 62 saillant par rapport à la planche de façade 2 et recourbé vers l'axe de pivotement XX.

La couronne 5 est une partie du boîtier 3, mais pourrait aussi être une pièce rapportée. Elle porte des pictogrammes 51 répartis sur un arc supérieur, d'un angle de 220° environ, et correspondant aux fonctions sélectionnables par la molette 6. Une ouverture 52 est pratiquée derrière chaque pictogramme 51 pour permettre un éclairage du pictogramme. Une première ampoule 8 d'éclairage est portée par une carte électrique fixe 9, fixée dans le boîtier sous la couronne 5 pour éclairer les pictogrammes. Le doigt 62 est recourbé au-dessus de la couronne 5 de telle sorte qu'il peut recouvrir les pictogrammes 51. Il comporte en outre un encochage 63 laissant un pictogramme visible lorsque le doigt 62 est centré sur lui.

Le socle 4 comporte une tige 41 cylindrique montée pivotante dans un guide 33 cylindrique du boîtier 3, d'axe XX. La tige 41 comporte une couronne dentée 42 à son extrémité. Le socle 4 est représenté d'une seule pièce, mais il va de soit qu'il doit être construit en plusieurs pièces. Un mécanisme, non représenté, est entraîné par la couronne dentée 42 pour commander par exemple la température à l'intérieur de l'habitacle. La tige 41 supporte une carte électrique mobile 44 comportant des pistes 45. Une nappe électrique 46 souple relie les cartes électriques 9, 44 entre elles.

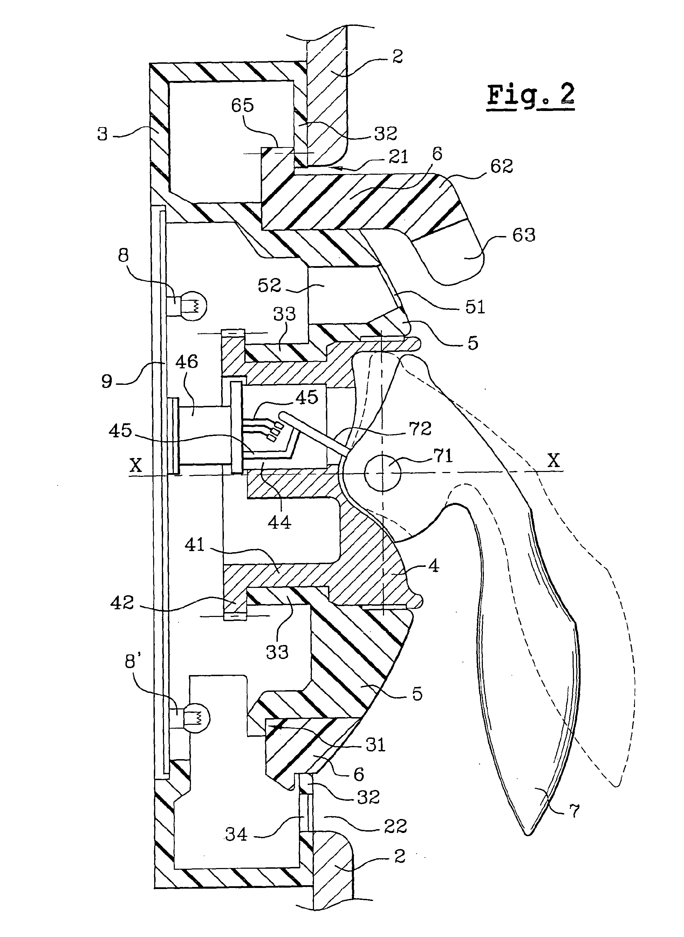

Le socle 4 comporte une chape formée par deux ailes 43, 44 entre lesquelles est monté le levier 7. Un pivot 71 traverse à la fois les ailes 43, 44 et le levier 7 pour articuler le levier autour de l'axe de socle YY. La carte électrique mobile 44 permet de transmettre des informations liées à la position angulaire du levier 7 par l'intermédiaire d'un pont 72, solidaire du levier 7, qui établit des contacts entre différentes pistes 45 lors du mouvement du levier. Le levier commande par exemple le débit d'aération par la vitesse d'un ventilateur, avec plusieurs positions indexées, en passant d'une position basse comme représentée en trait fort sur la figure 2 à une position haute comme représentée en trait pointillés. Eventuellement, l'une des positions peut commander le recyclage de l'air à l'intérieur de l'habitacle.

Une échancrure 22 en arc élargit l'ouverture 21 dans la planche de façade 2, de telle sorte à couvrir la projection du levier sur la planche de façade entre la première position I et la deuxième position II, représentées en pointillés sur la figure 1. Une fenêtre 34 dans le boîtier 3 s'étend sur toute la surface de l'échancrure 22. La fenêtre 34 est colorée, par exemple en bleu pour sa moitié droite, telle que vue sur la figure 1, correspondant à la deuxième position II du levier, et en rouge pour sa moitié gauche, correspondant à la première position I du levier. Une deuxième ampoule 8' d'éclairage est fixée sur la carte électrique fixe 9 sous la fenêtre 34 pour l'éclairer.

Des variantes d'exécution de la structure du dispositif peuvent être prévues tout en restant dans le cadre de l'invention. Par exemple, les fonctions pourront être réparties différemment entre les axes de commande. De même, d'autres mécanismes de transmission peuvent être prévus.

## Revendications

1. Dispositif de commande d'un système de ventilation pour un habitacle de véhicule, comportant un boîtier (3) destiné à être fixé sur une planche de bord (1), un socle (4) monté pivotant sur le boîtier (3) autour d'un axe (XX) sensiblement perpendiculaire à une face avant du boîtier (3) pour commander une première commande, un levier (7) monté pivotant sur le socle (4) selon un axe sensiblement parallèle à la face avant pour commander une deuxième commande, **caractérisé en ce que** le dispositif comporte en outre une mollette (6) concentrique au socle (4) et montée pivotante autour de l'axe (XX) du socle (4) pour commander une troisième commande.

2. Dispositif selon la revendication 1, **caractérisé en ce que** le pivotement du socle (4) commande une température dans l'habitacle, le pivotement du levier (7) sur le socle commande une vitesse de ventilateur et le pivotement de la molette (6) commande une répartition de l'aération.

3. Dispositif selon la revendication 1, **caractérisé en ce qu'**il comporte une couronne (5) interposée entre le socle (4) et la molette (6) et fixée rigidement sur le boîtier (3).

4. Dispositif selon la revendication 3, **caractérisé en ce qu'**il comporte une ampoule (8) d'éclairage sous la couronne (5).

5. Planche de bord **caractérisée en ce qu'**elle comporte un dispositif de commande selon la revendication 1, une façade (2) comportant une ouverture (21) sensiblement circulaire, le dispositif de commande étant fixé par des moyens fusibles (35) à la façade (2) de telle sorte que la molette (6), le socle (4) et le levier (7) traversent l'ouverture (21) pour être accessible à un utilisateur, les moyens fusibles (35) permettant l'escamotage du dispositif de commande derrière la façade (2) lors d'un choc sur le dispositif de commande.

6. Planche de bord selon la revendication 5, **caractérisée en ce que** le dispositif de commande comporte une couronne (5) interposée entre le socle (4) et la molette (6) et fixée rigidement sur le boîtier (3), un doigt (62) fixé sur la molette (6) faisant saillie et se prolongeant au-dessus de la couronne (5) pour qu'un utilisateur puisse saisir le doigt (62) et faire pivoter la molette (6).

7. Planche de bord selon la revendication 6, **caractérisée en ce que** la couronne (5) porte des pictogrammes (51) associés à différentes fonctions, le doigt (62) comportant un encochage (63) au-dessus de la couronne (5) laissant le pictogramme (51) visible quand le doigt (62) est placé au-dessus d'un pictogramme (51).

8. Planche de bord selon la revendication 5, **caractérisée en ce que** le levier (7) est mobile entre une première position (I) et une deuxième position (II), la façade (2) comportant une échancrure (22) le long de l'ouverture (21), l'échancrure (22) correspondant sensiblement à la projection du levier (7) sur la façade (2) lorsqu'il passe d'une position à l'autre, pour que le levier (7) puisse s'escamoter derrière la façade (2) lors d'un choc sur le dispositif de commande.
